# EUROPEAN PATENT SPECIFICATION

(11) **EP 1 164 877 B1**
(45) Date of publication and mention of the grant of the patent: **16.07.2003**
(21) Application number: 00922575.6
(22) Date of filing: 30.03.2000
(51) Int. Cl.: A23P 1/08

(54) **SPRAYING EQUIPMENT**
SPRÜHVORRICHTUNG
MATERIEL DE PULVERISATION

(30) Priority: 02.04.1999 FR 9904143
(43) Date of publication of application: 02.01.2002
(73) Proprietor: AVENTIS ANIMAL NUTRITION S.A., 92160 Antony (FR)
(72) Inventor: ANNONIER, Claude, Aventis Animal Nutrition SA, F-92160 Antony (FR); NUFFER, Sebastien, Aventis Animal Nutrition SA, F-92160 Antony (FR); MALLARACH CAPDEVILA, Juan, E-08560 Manlleu, Barcelona (ES)
(74) Representative: Barlow, Roy James
(86) International application number: EP0002822
(87) International publication number: WO00059321

(56) References cited:
- EP-A- 0 789 291
- WO-A-97/16964
- DE-A- 4 413 249
- US-A- 3 894 690
- US-A- 4 108 335
- US-A- 4 738 219
- US-A- 5 916 625

## Description

The present invention relates to a novel piece of equipment for spraying a liquid additive composition onto a solid product, for example a foodstuff. It relates more particularly to apparatus which allows homogeneous spraying of very small amounts of a liquid constituent onto relatively large amounts of solid product.

The term "solid product" as used herein is intended to embrace a product in the form of pellets, or in the form of a crumble, or in the form of a powder which can be used to form a mash feed.

A preferred application of the present invention relates to apparatus for spraying liquid food additives which are to be present in the foodstuff in small weight amounts and which consist essentially of enzymes and/or vitamins and/or carotenoids. The said additives are often added in very small quantities of the order of a few tens or hundreds of grams per ton of foodstuffs.

In the prior art there are various examples of mixing additives to a major constituent, for example in US-A-4108335, US-A-5516625 and DE-A-4413249.

Where the major constituent receiving the additive minor constituent is in solid form it has been proposed previously to dilute the additive in a carrier liquid, for example as proposed in WO-A-97/16964. Another example of dilution of the additive is disclosed as one optional possibility in Patent EP 789291, where there is described apparatus comprising:
- one or more thermostatted containers which contain the enzyme which may be in pre-diluted form;
- a system for extracting the liquid enzyme from its container;
- a flow regulation valve;
- a flow meter with high sensitivity;
- an injection system which has an adjustable angle of atomization; and
- a microprocessor-controlled electronic system for regulating the dose of the liquid enzyme.

Although this spraying system, which is very efficient and has been used commercially for many years, allowed the introduction of a liquid food additive which might be in pre-diluted form, it was not constructed with a view to allowing continuous variation of dilution. With use it appeared that this system was not perfectly adapted for enzymes which had to be introduced at different concentrations, or for the introduction of several different constituents which are mutually incompatible, whether from a physical or chemical point of view.

Thus, the introduction of additives such as enzymes in aqueous solution could not be carried out with the concomitant introduction of additives in lipid form such as the vitamins A or E, or proteases could not be introduced with protein enzymes.

In the prior system, the dilution of the enzyme was determined in advance and the quantity of diluted enzyme was adjusted by the microprocessor-controlled flow meter to be related to the amount of foodstuff which passed on a conveyor belt. With this system, there was a constant adaption of the flow rate of the spraying flow to the amount of dry foodstuffs transported by the conveyor belt.

However, it has now been found, unexpectedly, that it is easier and more advantageous to adapt the dilution of the additive in the diluent (water) both to the amount of dry foodstuffs transported by a conveyor belt and to the flow of the additive so as to keep the tocal spraying flow constant for a constant flow rate of dry foodstuffs.

Thus, the present invention relates to a device for spraying an additive diluted with a diluent therefor, consisting of :
- a diluent container;
- a further container for a said additive;
- at least one mixer;
- conduits communicating said diluent container and additive container with said mixer for allowing the dilution of the additive by the diluent from said diluent container;
- spraying means connected to receive the output from said at least one mixer with a constant flow rate and to spray it at a spray zone; and
- means for transporting a solid product to said spray zone to receive the additive;
- wherein in said conduits there is a respective regulation valve per liquid associated with the first mentioned and further containers; there are dilution control means for controlling said regulation valves to control the rates of flow of the diluent and additive to said mixer, said dilution control means being responsive to the flow of solid product being conveyed by said transporting means to control the rate of flow of the additive in proportion to the flow of solid product, and being effective to vary the flow of diluent in response to the desired total flow rate of liquid to said spraying means to maintain a constant total flow rate;
- characterised in that the spray nozzle is aimed towards the means for transporting a solid product to be sprayed, and in that the control means are in the form of a microprocessor responsive to the weight of solid product present on said transporting means.

The present invention preferably employs static mixers.

The transporting means may be a conveyor and the regulation valves may be managed by a microprocessor which, according to the weight of solid product present on the conveyor where the additive/ diluent mixture is sprayed, modulates the proportional flow rate of the different additives and diluent in such a way as to maintain a spraying flow rate which is constant and proportional to the weight of solid product.

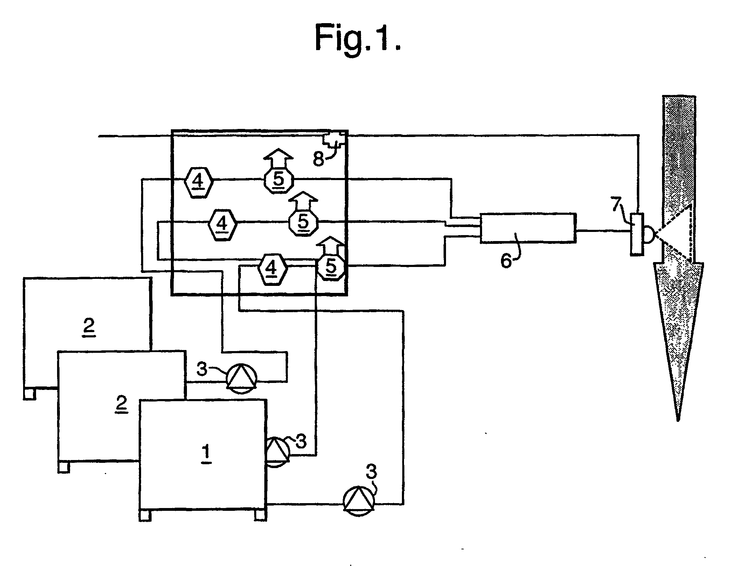

If, according to Figure 1, the flow is followed starting from the water container(1), the liquid is pumped by the pump (3) as far as the flow meter (4), then is introduced into a regulation valve (5) before being introduced into the mixer (6).

If the flow is followed starting from the first additive container (2), the liquid is pumped by the pump (3) as far as the flow meter (4), then is introduced into a regulation valve (5) before being introduced into the mixer (6). This is the case for each further additive.

The mixture of water and several different additives is sprayed by an injector (7) with a constant flow rate assisted by a flow of air (8) on a flow of granules. Although the granules may be travelling on a conveyor, e.g. a horizontal belt conveyor it is preferable for them to be sprayed while dropping vertically from a pelleting chiller. Any other transport means for the solid product can be used.

When several of the additives cannot be mixed together in the aqueous flow, several spraying systems may be individually adapted to the throughput of the apparatus, so as to give a variable application of each additive to the solid product, while maintaining optimum flow through the spray nozzle. It is evident that, even if the additives are mutually compatible, it may be advantageous to adapt several spraying nozzles to the outlet of the apparatus.

The advantages of the present device are as follows:
- homogeneous distribution of the liquid additive(s) onto the foodstuff
- regulation of the flow rate of one of the additives without necessarily disturbing the functioning of the atomization nozzle
- conformity with the statutory demands on premixed additives
- mixing of mutually unstable products.

It has been found that with the system of the present invention it is possible to achieve a wide variation in the flow rates of the various liquids, and a precisely controlled application rate of the at least one additive to the solid product. For example, the application rate of any one of the additives can be in the range of from 1 litre to 15 litres per hour, and as an example it is possible for two separate additives to be introduced to the diluent water flow, one at the rate of 1 litre per hour and the other at a flow rate of 15 litres per hour.

In order to maintain optimum flow conditions at the spray nozzle, the flow of water will be selected so as to provide the required flow rate which may be in the range of from 20 - 100 litres per hour per spray nozzle.

Using such values, it is possible to achieve a homogeneous application of from 0.5 to 1 litre of an additive per tonne of solid foodstuff granules passing through the apparatus.

Although throughout the present application there is reference to a solid product to which the additive/diluent mixture is applied, this is intended to denote that the product is not flowable, and in the preferred use of the apparatus the solid product will be a dry product, preferably in granular form.

## Claims

1. A device for spraying an additive diluted with a diluent therefor, consisting of:
- a diluent container (2) ;
- a further container (2) for a said additive;
- at least one mixer (6) ;
- conduits communicating said diluent container and additive container (1 and 2) with said mixer (6) for allowing the dilution of the additive by the diluent from said diluent container (1);
- spraying means (7) connected to receive the output from said at least one mixer with a constant flow rate and to spray it at a spray zone; and
- means for transporting a solid product to said spray zone to receive the additive;
- wherein in said conduits there is a respective regulation valve (5) per liquid associated with the first mentioned and further containers (1, 2) ; there are dilution control means for controlling said regulation valves (5) to control the rates of flow of the diluent and additive to said mixer, said dilution control means being responsive to the flow of solid product being conveyed by said transporting means to control the rate of flow of the additive in proportion to the flow of solid product, and being effective to vary the flow of diluent in response to the desired total flow rate of liquid to said spraying means to maintain a constant total flow rate;
- **characterised in that** the spray nozzle is aimed towards the means for transporting a solid product to be sprayed, and **in that** the control means are in the form of a microprocessor responsive to the weight of solid product present on said transporting means.

2. A device according to claim 1, **characterised in that** one or more conduits connecting a diluent container or an additive container to a mixer are associated with respective flow meters.

3. A device according to claim 1, **characterised in that** there are several additive containers (2) connected to said mixer, each said additive container being associated with a respective additive flow meter (4) and additive flow regulation valve (5)

4. A device according to claim 1, **characterised in that** the or each mixer is a static mixer.

5. A device according to any one of claims 1 to 4, **characterised in that** there are several said further containers communicating with a common said mixer (6);
- and **in that** the control means modulates the proportional flow rate of each of the different additives in response to the amount of solid product.

6. A device according to any of claims 1 to 5, **characterised in that** a flow of gas is provided to the spraying means to assist the spraying at a constant rate.

7. A device according to any one of claims 1 to 3, **characterised in that**, in use of the device, liquid is pumped by the diluent pump (3) from the diluent container (1) as far as a diluent flow meter (4) and then introduced into the associated diluent regulation valve (5) before being introduced into the mixer (6);
- **in that** liquid is pumped by the or each additive pump (3) from the additive container (2) as far as a flow meter (4) for the additive and then introduced into an additive regulation valve (5) before being introduced into the mixer (6) ;
- and **in that** the mixture of diluent (s) and additive is sprayed by an injector (7) with a constant flow rate assisted by a flow of air (8).

8. A device according to any one of claims 1 to 5, **characterised by** several spraying systems (7) each able to be adapted to the throughput of solid product.

## Patentansprüche

1. Vorrichtung zum Sprühen eines Zusatzstoffes, der mit einem dafür vorgesehenen Verdünner verdünnt ist, bestehend aus:
- einem Verdünnerbehälter (1),
- einem weiteren Behälter (2) für einen besagten Zusatzstoff,
- zumindest einem Mischer (6),
- Leitungen, die den Verdünnerbehälter und den Zusatzstoffbehälter (1 und 2) mit dem Mischer (6) verbinden, um die Verdünnung des Zusatzstoffes durch den Verdünner aus dem Verdünnerbehälter (1) zu ermöglichen,
- Sprüheinrichtungen (7), die angeschlossen sind, um den Ausstoß von dem zumindest einen Mischer mit einer konstanten Strömungsrate aufzunehmen und ihn auf eine Sprühzone zu sprühen, und
- Einrichtungen zum Transportieren eines festen Produkts zur Sprühzone, um den Zusatzstoff aufzunehmen,
- wobei in den Leitungen jeweils ein Regelventil (5) für jede den erstgenannten und weiteren Behältern (1, 2) zugeordnete Flüssigkeit vorhanden ist, Verdünnungssteuereinrichtungen zum Steuern der Regelventile (5) vorgesehen sind, um die Strömungsraten des Verdünners und des Zusatzstoffes zum Mischer zu steuern, wobei die Verdünnungssteuereinrichtungen auf den Zustrom des festen Produkts ansprechen, das durch die Transporteinrichtung befördert wird, um die Strömungsrate des Zusatzstoffes proportional zum Zustrom des festen Produkts zu steuern, und dazu dienen, den Verdünnerstrom in Antwort auf die gewünschte Gesamtströmungsrate der Flüssigkeit zur Sprüheinrichtung zu variieren, um eine konstante Gesamtströmungsrate aufrechtzuerhalten,
- **dadurch gekennzeichnet, dass** die Sprühdüse auf die Einrichtung zum Transportieren eines zu besprühenden festen Produkts gerichtet ist und dass die Steuereinrichtungen in Form eines Mikroprozessors bereitgestellt sind, der auf das Gewicht des festen Produkts anspricht, das sich auf der Transporteinrichtung befindet.

2. Vorrichtung nach Anspruch 1,
**dadurch gekennzeichnet, dass** eine oder mehrere Leitungen, welche einen Verdünnerbehälter oder einen Zusatzstoffbehälter mit einem Mischer verbinden, jeweils Durchflussmessern zugeordnet sind.

3. Vorrichtung nach Anspruch 1,
**dadurch gekennzeichnet, dass** mehrere Zusatzstoffbehälter (2) mit dem Mischer verbunden sind, wobei jeder der Zusatzstoffbehälter jeweils einem Zusatzstoffdurchflussmesser (4) und einem Zusatzstoffströmungsregelventil (5) zugeordnet ist.

4. Vorrichtung nach Anspruch 1,
**dadurch gekennzeichnet, dass** der oder jeder Mischer ein statischer Mischer ist.

5. Vorrichtung nach einem der Ansprüche 1 bis 4,
**dadurch gekennzeichnet, dass** mehrere der weiteren Behälter vorgesehen sind, die mit einem gemeinsamen Mischer (6) in Verbindung stehen
- und dadurch dass die Steuereinrichtung die proportionale Strömungsrate eines jeden der verschiedenen Zusatzstoffe in Antwort auf die Menge des festen Produkts moduliert.

6. Vorrichtung nach einem der Ansprüche 1 bis 5,
**dadurch gekennzeichnet, dass** der Sprüheinrichtung ein Gasstrom zugeführt wird, um das Sprühen mit einer konstanten Rate zu unterstützen.

7. Vorrichtung nach einem der Ansprüche 1 bis 3,
**dadurch gekennzeichnet, dass** beim Gebrauch der Vorrichtung Flüssigkeit durch die Verdünnerpumpe (3) vom Verdünnerbehälter (1) bis zum Verdünnerdurchflussmesser (4) gepumpt und dann in das zugeordnete Verdünnerregelventil (5) eingespeist wird, bevor sie in den Mischer (6) eingebracht wird,
- dadurch, dass Flüssigkeit durch die oder jede Zusatzstoffpumpe (3) vom Zusatzstoffbehälter (2) bis zu einem Durchflussmesser (4) für den Zusatzstoff gepumpt und dann in ein Zusatzstoffregelventil (5) eingespeist wird, bevor sie in den Mischer (6) eingebracht wird,
- und dadurch, dass das Gemisch des/der Verdünner(s) und des Zusatzstoffes durch einen Injektor (7) unterstützt durch einen Luftstrom (8) mit einer konstanten Strömungsrate und versprüht wird.

8. Vorrichtung nach einem der Ansprüche 1 bis 5,
**gekennzeichnet durch** mehrere Sprühsysteme (7), von denen jedes an den Durchsatz des festen Produkts angepasst werden kann.

## Revendications

1. Dispositif pour pulvériser un additif dilué avec un diluant, consistant en :
- un conteneur de diluant (1) ;
- un conteneur supplémentaire (2) pour ledit additif ;
- au moins un mixeur (6) ;
- des conduites faisant communiquer lesdits conteneur de diluant et conteneur d'additif (1 et 2) avec ledit mixeur (6) pour permettre la dilution de l'additif par le diluant à partir dudit conteneur de diluant (1) ;
- un moyen de pulvérisation (7) connecté à la sortie dudit au moins un mixeur afin de recevoir le produit avec un débit d'écoulement constant et afin de le pulvériser dans une zone de pulvérisation ; et
- un moyen pour transporter un produit solide vers ladite zone de pulvérisation afin de recevoir l'additif ;
- dans lequel dans lesdites conduites se trouve une vanne de régulation respective (5) par liquide associé avec le premier conteneur mentionné et le suivant (1, 2) ; il existe des moyens de contrôle de la dilution pour contrôler lesdites vannes de régulation (5) pour contrôler le débit d'écoulement du diluant et de l'additif jusqu'audit mixeur, ledit moyen de contrôle de la dilution étant sensible au débit du produit solide étant transporté par ledit moyen de transport afin de contrôler le débit d'écoulement de l'additif proportionnellement au débit d'écoulement du produit solide, et étant efficace pour varier le débit du diluant en réponse au débit d'écoulement total désiré du liquide audit moyen de pulvérisation afin de maintenir un débit d'écoulement moyen constant ;
- **caractérisé en ce que** la buse de pulvérisation est dirigée vers le moyen pour transporter un produit solide à pulvériser, et **en ce que** les moyens de contrôle sont sous la forme d'un microprocesseur sensible au poids du produit solide présent sur ledit moyen de transport.

2. Dispositif selon la revendication 1, **caractérisé en ce qu'**une ou plusieurs conduites raccordant un conteneur de diluant ou un conteneur d'additif à un mixeur sont associées avec des débitmètres respectifs.

3. Dispositif selon la revendication 1, **caractérisé en ce qu'**il existe plusieurs conteneurs d'additif (2) raccordés audit mixeur, chacun desdits conteneurs d'additif étant associé à un débitmètre d'additif (4) respectif et à une vanne de régulation d'écoulement d'additif (5).

4. Dispositif selon la revendication 1, **caractérisé en ce que** le ou chaque mixeur est un mixeur statique.

5. Dispositif selon l'une quelconque des revendications 1 à 4, **caractérisé en ce qu'**il existe ce que l'on appelle plusieurs conteneurs supplémentaires communiquant avec ce que ledit mixeur commun (6) ;
- et **en ce que** le moyen de contrôle module le débit d'écoulement proportionnel de chacun des différents additifs en réponse à la quantité de produit solide.

6. Dispositif selon l'une quelconque des revendications 1 à 5, **caractérisé en ce qu'**un écoulement de gaz est fourni au moyen de pulvérisation afin d'assister la pulvérisation à un débit constant.

7. Dispositif selon l'une quelconque des revendications 1 à 3, **caractérisé en ce que**, lors de l'utilisation du dispositif, du liquide est pompé par la pompe à diluant (3) depuis le conteneur de diluant (1) jusqu'au débitmètre de diluant (4) et ensuite introduit dans la vanne de régulation de diluant associée (5) avant d'être introduit dans le mixeur (6) ;
- **en ce que** le liquide est pompé par le ou chaque pompe d'additif (3) depuis le conteneur d'additif (2) jusqu'au débitmètre (4) pour l'additif et ensuite introduit dans une vanne de régulation d'additif (5) avant d'être introduit dans le mixeur (6) ;
- et **en ce que** le mélange de diluant(s) et d'additif est pulvérisé par un injecteur (7) à un débit d'écoulement constant assisté par un débit d'air (8).

8. Dispositif selon l'une quelconque des revendications 1 à 5, **caractérisé par** plusieurs systèmes de pulvérisation (7) chacun pouvant s'adapter au débit de produit solide.
